# EUROPÄISCHE PATENTSCHRIFT

(11) **EP 0 713 500 B1**
(45) Veröffentlichungstag und Bekanntmachung des Hinweises auf die Patenterteilung: **09.12.1998**
(21) Anmeldenummer: 94926835.3
(22) Anmeldetag: 12.08.1994
(51) Int. Cl.: C08G 18/54, B22C 1/22

(54) **MASSEN ZUM HERSTELLEN VON GIESSEREIKERNEN UND -FORMEN**
MATERIALS FOR PRODUCING FOUNDRY CORES AND MOULDS
MATIERES UTILISEES DANS LA FABRICATION DE NOYAUX ET DE MOULES DE FONDERIE

(30) Priorität: 13.08.1993 DE 4327292
(43) Veröffentlichungstag der Anmeldung: 29.05.1996
(73) Patentinhaber: Ashland-Südchemie-Kernfest GmbH, 40704 Hilden (DE)
(72) Erfinder: KÖGLER, Hubert, D-40822 Mettmann (DE); KUHLMANN, Peter, D-42489 Wülfrath (DE); WINTER, Reinhard, D-42489 Wülfrath (DE)
(74) Vertreter: VOSSIUS & PARTNER
(86) Internationale Anmeldenummer: EP9402705
(87) Internationale Veröffentlichungsnummer: WO9505409

(56) Entgegenhaltungen:
- EP-A- 0 022 215
- EP-A- 0 023 586
- GB-A- 2 017 126
- GB-A- 2 050 400
- US-A- 3 905 934
- Kunststoff Handbuch; Teil 7; "Polyurethane"; Carl Hanser Verlag, München, 1983; Seiten 19-30, 107-108, 607

## Beschreibung

Die Erfindung betrifft Massen zum Herstellen von Gießereikernen und -formen, auf der Basis von Bindersystemen, die eine Polyolkomponente und eine Polyisocyanatkomponente enthalten, wobei die Polyolkomponente frei von flüchtigen Lösungsmittelbestandteilen ist, die am Reaktionsgeschehen beim Abbinden nicht teilnehmen.

Die vorliegende Erfindung geht von der deutschen Auslegeschrift 15 83 521 aus, die ein sogenanntes Cold-Box-Verfahren für Gießereikernsande mit kalthärtenden, organischen Bindemittel beschreibt. Gemäß vorstehender Auslegeschrift besteht das Bindemittel aus zwei Binderkomponenten, wobei die Binderkomponente 1 ein Polyol mit mindestens zwei Hydroxylgruppen pro Molekül in Form einer Lösung umfaßt. Das Polyol ist vorzugsweise ein Kondensationsprodukt von Phenol und/oder einem Phenolderivat mit einem Aldehyd, das als Phenolharz bezeichnet werden kann.

Die Binderkomponente 2 ist eine Lösung von Polyisocyanat mit mindestens zwei Isocyanatgruppen pro Molekül. Diese beiden Komponenten werden einer Formstoffmischung enthaltend Quarzsand, Chromitsand, Olivinsand, Zirkonsand und/oder Regenerat unter Mischen getrennt zugesetzt. Normalerweise werden die beiden Binderkomponenten im Mischungsverhältnis 1:1 verwendet. Die Menge des Bindemittels liegt üblicherweise im Bereich von 0,3 Gew.-% bis 2 Gew.-% pro Binderkomponente, bezogen auf die Formstoffmischung und ist abhängig von der Sandbeschaffenheit und den Fertigungsbedingungen in der Kernmacherei, sowie von den Anforderungen, die an die Kerne bzgl. der Festigkeit gestellt werden. Nach dem Formfüllungsvorgang mit dem Formstoff-Bindergemisch (ggf. durch Verdichtung) wird durch Begasen mit katalytischen Mengen eines tertiären Amins das Bindemittel gehärtet. Anschließend können die Kerne oder Formen dem Formwerkzeug entnommen werden, da eine ausreichende Anfangsfestigkeit gegeben ist. Die Endfestigkeit stellt sich dann innerhalb von maximal 24 Std. durch eine langsamere Nachhärtung ein.

In der Schnelligkeit mit der Kerne nach dem Cold-Box-Verfahren in großer Stückzahl und in Serie gefertigt werden können liegt einer der großen Vorteile gegenüber anderen bekannten Verfahren.

Ein entscheidender Nachteil des aus der vorstehenden Auslegeschrift bekannten Bindemittels und aller heute bekannten Bindemittelsysteme für das Cold-Box-Verfahren liegt darin, daß flüchtige Lösungsmittel sog. VOC (volatile organic compounds) sowohl für die Polyol- als auch für die Polyisocyanatkomponente benötigt werden, um qualitativ hochwertige Produkte zu bekommen.

Ein großer Teil dieser VOC-Lösungsmittel dunsten nach der Aushärtung während der Lagerung aus und belasten somit den Arbeitsplatz und die Umwelt. Im Kern verbliebene Lösungsmittelreste verdampfen oder unterliegen thermischen Crackprozessen beim Abguß. Die hieraus resultierenden Zersetzungsprodukte, dürften in aller Regel im Sinne der Gefahrstoffverordnung als gefährliche Stoffe höher einzustufen sein als die zugrundeliegenden Lösungsmittel.

Die einschlägige Literatur auf dem Fachgebiet, beschreibt vorstehende Lösungsmittel als notwendige Bestandteile der Bindemittel um die erforderliche Verdünnung zu erreichen, die sich in einer verbesserten Mischbarkeit der Komponenten und einer besseren Homogenität des Produkts wiederspiegelt.

Ferner wird eine Senkung der Viskosität erreicht, die zu einer verbesserten Benetzung des Formstoffes führt.

Auf dem Fachgebiet werden daher die Polyol- und die Polyisocyanatkomponenten in Lösungsmitteln gelöst, die diese VOC in Form geeigneter polarer und/oder unpolarer, protischer und/oder aprotischer sowie aromatischer Komponenten enthalten.

So hält z.B. W. Lotz diese Lösungsmitttel in seiner Dissertation (RWTH Aachen, 1984) für fertigungsgerecht und unerläßlich.

Den Gehalt an flüchtigen Lösungsmitteln handelsüblicher Cold-Box-Bindersysteme gibt er mit 32 bis 35 % an. Reduzierung oder Eliminierung der Lösungsmittelgehalte führt nach seinen Untersuchungen zu einer
- erhöhten Binderviskosität,
- verschlechterten Verschießbarkeit des Formstoffes,
- erschwerten Bindung zwischen dem Bindermaterial und der Sandkornoberfläche,
- Versprödung des Binders während der Lagerung
- und zu einer kaum ausgeprägten oder einer negativ verlaufenden Nachhärtung.

Dies führt dann ursächlich zu niedrigen Festigkeiten sowohl bei den Sofortwerten als auch bei den Endwerten und damit zu Kernbruch.

In seinem 1984 angemeldeten europäischen Patent EP-A-143 954 beschreibt Prof. Dr.-Ing. D. Boenisch als Nachteil des Cold-Box-Verfahrens, daß Lösungsmittelgehalte von 30 bis 40 % für Cold-Box-Binder verwendet werden, die für die Dünnflüssigkeit, eine hohe Reaktivität des Binders, eine gute Verschießbarkeit der Formstoffmischung und ausreichende Festigkeit notwendig sind. Dieser hohe Lösungsmittelgehalt führt während der Verarbeitung und beim Abguß zu erheblichen Umweltbelastungen. Geringere Mengen an Lösungsmitteln ergeben nach seinen Untersuchungen
- eine verschlechterte Festigkeit, insbesondere der Formteiloberflächen,
- eine Beeinträchtigung der Kantenfestigkeit
- und insgesamt rieselige und mürbe Formteile.

Gemäß EP-B-00 14 855 beträgt der Anteil an flüchtigem Lösungsmittel (aromatische Kohlenwasserstoffe, Siedebereich 160 bis 180°C) in der Polyolkomponente 45 bis 50 % und gemäß DE-A-32 37 000 werden 35 % Naphtha (Siedebereich 160 bis 180°C) dem Phenolharz als Lösungsmittel zugesetzt.

Um eine gleichmäßige Umhüllung der Körner des Formgrundstoffes zu erzielen wird die geeignete Lösungsmittelmenge für die Polyolkomponente in der EP-A-0 107 811 (2) mit 20 bis 80 Gew.-% angegeben. Dadurch wird ferner eine gute Fließfähigkeit und eine gleichmäßige Aushärtereaktion der Formstoffmischung sichergestellt.

In der DE-A- 33 32 063 besteht die Polyolkomponente zu 46 % (6,6 % Butoxyl, 5,5 % Isophoron und 35 % Solvesso 100) und die Polyisocyanatkomponente zu 12 % (aromatische Kohlenwasserstoffe) aus Lösungsmitteln.

US-A-3 905 934 offenbart Bindersysteme, die Dialkylphthalatester als Teil oder gesamtes Lösungsmittelsystem enthalten. Der Binder ist ein Phenolharz-Polyisocyanat-Binder, EP-A-22 215 beschreibt die zweistufige Herstellung von Formkörpern auf Polyurethanbasis. EP-A-23 586 beschreibt lösungsmittelfreie Formmassen, die aus einem durch Erhitzen zu vernetztem Polyurethan härtbaren Bindemittel und einem Füllstoff besteht. GB-A-2 017 126 beschreibt Phenolharz-Polyisocyanat-Binder wobei der Gebrauch von organischen Lösungsmitteln in Bindemitteln durch die Verwendung einer wäßrigen Emulsion des Phenolharzes zusammen mit einem flüssigen Polyisocyanat vermieden wird. Kunststoff-Handbuch, Band 7, Polyurethane, Hrsg. G.Oertel, Hanser Verlag, beschreibt auf Seiten 19-30, 107, 108 und 607 Herstellungs verfahren für Polyurethane sowie deren Verwendung bei der Kernsandbindung.

Das technische Problem der Erfindung ist folglich, die flüchtigen Lösungsmittel zu eliminieren oder gegebenenfalls zu substituieren, da in Europa und den USA die sogenannten VOC aus ökologischen Gründen unerwünscht sind und teilweise regional schon die Verwendung durch den Gesetzgeber reglementiert ist. So zeigen z.B. jüngste Messungen von VOC-Emissionen, daß die Belastung durch VOC regional schon größer ist als diejenigen von SO₂ und/oder NOₓ. Die Bildung von Photooxidantien, insbesondere Ozon erfolgt nach neuesten Kenntnissen im wesentlichen aus den Vorläufersubstanzen VOC unter Beteiligung von Stickoxiden bei entsprechender Sonneneinstrahlung.

Trotz der Eliminierung oder Substitution flüchtiger Lösungsmittel in der Binderkomponente 1 (Polyolkomponente) und der Reduzierung bzw. auch Eliminierung in der Binderkomponente 2 (Polyisocyanatkomponente) sollen die für Cold-Box-BinderSysteme typischen, positiven Eigenschaften erhalten bleiben oder gegebenenfalls noch verbessert werden. Dazu zählen insbesondere eine ausreichend niedrige Viskosität und eine damit verbundene gute Benetzung der Körner der Formstoffmischung, eine schnelle Aushärtung mit daraus resultierenden hinreichenden Sofortfestigkeiten, eine positiv verlaufende Nachhärtung mit daraus resultierenden hinreichenden Endfestigkeiten und einer angemessenen Feuchtebeständigkeit.

Gelöst wird vorstehendes Problem durch ein erfindungsgemäßes Bindemittel aus einer Binderkomponente 1, die mindestens ein Polyol umfaßt und einer Binderkomponente 2, die mindestens ein Polyisocyanat umfaßt, dadurch gekennzeichnet, daß die Binderkomponente 1 frei ist von flüchtigen, nicht reaktiven Lösungsmitteln, und, mindestens einen Weichmacher, mindestens ein internes Trennmittel und mindestens eine zusätzliche hydroxylgruppenhaltige Komponente umfaßt.

Als Polyole werden erfindungsgemäß Benzyletherharze, Novolake und/oder Resole verwendet, wobei Benzyletherharze bevorzugt sind.

Geeignete Benzyletherharze, Novolake oder Resole sind Kondensationsprodukte von Phenol bzw. Phenolderivaten mit einem Aldehyd.

Als Phenolderivate werden z.B. 4-Amylphenol, 4-Butylphenol, 4-Butoxyphenol, 4-Crotylphenol, 4-Cyclohexylphenol, 3,5-Dibutylphenol, 3,5-Dicyclohexylphenol, 3,5-Diethylphenol, 3,5-Dimethoxyphenol, 3-Ethylphenol, 4-Ethoxyphenol, o-Kresol, m-Kresol, p-Kresol, 2,3,4-Trimethylphenol, 3,4,5-Trimethoxyphenol, 3-Methyl-4-methoxyphenol, 4-Nonylphenol, 4-Octylphenol, 4-Phenylphenol, 4-Phenoxyphenol, 3,4-Xylenol und 3,5-Xylenol eingesetzt.

Als Aldehyde finden unter anderem Acetaldehyd, Benzaldehyd, Crotonaldehyd, Formaldehyd, 2-Furaldehyd und Propionaldehyd Verwendung. Vorzugsweise beträgt das molare Verhältnis von Phenol bzw. Phenolderivat und Aldehyd 1:0,5 bis 1:2,5.

Der Anteil des erfindungsgemäß verwendeten Polyols an der Binderkomponente 1 beträgt 30 bis 70 Gew.-%, wobei 40 bis 60 Gew.-% bevorzugt sind.

Als Weichmacher werden Phthalsäureester eines C₁₋₁₁-Alkohols, Adipinsäureester eines C₁₋₁₁-Alkohols, Fettsäurepolyglykolester und/oder epoxidierte Fettsäureester eingesetzt. Bevorzugte Weichmacher sind Phthalsäureisodecylester, Phthalsäureisononylester, Adipinsäureisodecylester, Adipinsäureisononylester, Acetyltributylcitrat und 2-Ethylhexylepoxystearat.

Der Anteil des erfindungsgemäß verwendeten Weichmachers an der Binderkomponente 1 beträgt 4 bis 25 Gew.-%, wobei 5 bis 15 Gew.-% bevorzugt sind.

Als interne Trennmittel finden erfindungsgemäß pflanzliche Öle, wie Distelöl, Erdnußöl, Holzöl, Kokosöl, Leinöl, epoxidiertes Leinöl, Mohnöl, Oiticicaöl, Olivenöl, Rapsöl, Safloröl, Salbeiöl, Sesamöl, Sonnenblumenöl, Sojaöl, epoxidiertes Sojaöl, Verwendung, wobei Leinöl, epoxidiertes Leinöl, Olivenöl und epoxidiertes Sojaöl bevorzugt sind.

Der Anteil des internen Trennmittels an der Binderkomponente 1 beträgt 2 bis 34 Gew.-%, wobei 5 bis 20 Gew.-% bevorzugt sind.

Die erfindungsgemäß eingesetzte hydroxylgruppenhaltige (reaktive) Komponente umfaßt:
a) primäre Alkohole, wie z.B. Methanol, Ethanol, n-Propanol, n-Butanol, n-Pentanol, n-Hexanol, 2-Ethylhexanol-1, n-Octanol, Furfurylalkohol,
b) sekundäre Alkohole, wie iso-Propanol, iso-Butanol, Pentanol-2, Hexanol-2,
c) Ketone, Ester oder Säuren mit mindestens einer Hydroxylgruppe, wie 3-Hydroxytricarballylsäure, 4-Hydroxy-4-methylpentan-2-on, 2-Hydroxypropionsäureester, Rizinusöl, Glycerinmonoacetat, Glycerindiacetat, Hydroxyethylacetat,
d) zweiwertige Alkohole, wie Ethandiol, Propandiol, Butandiol, Hexandiol,
e) höherwertige Alkohole, wie Glycerin, Trimethylolpropan, Pentaerythrit, Neopentylglykol, niedrigmolekulare Polyetherpolyole, oder Polyesterpolyole, und
f) Etheralkohole, wie Methoxyethanol, Methoxypropanol, Ethoxyethanol, Butoxyethanol, Diethylenglykol, Dipropylenglykol, Triethylenglykol, Tripropylenglykol, Polyethylenglykol, Polypropylenglykol, Polytetrahydrofuran.

Bevorzugte hydroxylgruppenhaltige Komponenten sind n-Butanol, Diethylenglykol, Furfurylalkohol, 3-Hydroxytricarballylsäureester, 4-Hydroxy-4-methylpentan-2-on, 2-Hydroxypropionsäureester, Monoethylenglykol, n-Pentanol, Rizinusöl.

Der Anteil der hydroxylgruppenhaltigen Komponente an der Binderkomponente 1 beträgt 10 bis 50 Gew.-%, wobei 15 bis 40 Gew.-% bevorzugt sind.

Gegebenenfalls kann die Binderkomponente 1 zusätzlich einen Haftvermittler enthalten, aus der Reihe der organo-funktionellen Alkoxysilane, wie z.B. 3-Aminopropyltriethoxysilan, 3-Aminopropyltrimethoxysilan, N-2-(Amino-ethyl)-3-aminopropyltrimethoxysilan, 3-Glycidoxypropyltrimethoxysilan, 3-Ureidopropyltriethoxysilan, 3-Ureidopropyltrimethoxysilan, wobei N-2-(Aminoethyl)-3-aminopropyltrimethoxysilan und 3-Glycidoxypropyltrimethoxysilan bevorzugt sind.

Der Anteil des Haftvermittlers an der Binderkomponente 1 beträgt 0 bis 1 Gew.-%, wobei 0,05 bis 0,5 Gew.-% bevorzugt sind.

Ferner kann die Binderkomponente 1 zusätzlich gegebenenfalls einen sogenannten bench-life-extender, wie 2-Hydroxybenzoesäure, 3-Hydroxytricarballysäure und/oder, 2-Hydroxypropionsäure enthalten, wobei 2-Hydroxypropionsäure bevorzugt ist.

Der Anteil des bench-life-extenders an der Binderkomponente 1 beträgt 0 bis 2 Gew.-%, wobei 0,05 bis 1 Gew.-% bevorzugt sind.

Als Polyisocyanat als Bestandteil der Binderkomponente 2 eignen sich besonders aromatische Polyisocyanate, wie z.B. Diphenyldiisocyanat, Diphenyldimethylmethandiisocyanat, Diphenyletherdiisocyanat, Diphenylmethandiisocyanat, Naphthalindiisocyanat, Toluoldiisocyanat und Xyloldiisocyanat sowie Gemische und Präpolymerisate dieser Polyisocyanate. Vorzugsweise werden technische Präparate der Polyisocyanate eingesetzt.

Der Anteil des Polyisocyanats an der Binderkomponente 2 beträgt 65 bis 100 Gew.-%, wobei 80 bis 100 Gew.-% bevorzugt sind.

Gegebenenfalls wird in der Binderkomponente 2 ein Lösungsmittel, z.B. ein aromatisches und/oder ketonisches Lösungsmittel eingesetzt.

Ferner können gegebenenfalls in der Binderkomponente 2 Inhibitoren (Stabilisatoren) auf der Basis von organischen oder anorganischen Säurechloriden eingesetzt werden. Beispielsweise sind Acetylchlorid, Benzoylchlorid, Isophthalsäuredichlorid, Phthalsäuredichlorid, Phosphorsäuretrichlorid, Stearylchlorid und Toluolsulfochlorid geeignet, wobei Phosphorsäuretrichlorid und/oder Isophthalsäuredichlorid bevorzugt sind.

Der Anteil der Inhibitoren in der Binderkomponente 2 beträgt 0 bis 2 Gew.-%, wobei 0,05 bis 1 Gew.-% bevorzugt sind.

Eine Eliminierung von VOC in der Binderkomponente 1, d.h. die Substitution von VOC gegen reaktive Komponenten und/oder gegen nicht flüchtige Additive, hat keine Erhöhung von Lösungsmittelanteilen in der Binderkomponente 2 zur Folge. Vielmehr ist es erfindungsgemäß sogar möglich, die flüchtigen Lösungsmittel in der Binderkomponente 2 zu reduzieren oder letztendlich auch vollständig zu eliminieren.

Völlig unerwartet treten neben den oben genannten Eigenschaften bei Verwendung der erfindungsgemäßen Bindemittel bei der Herstellung von Gießereikernen und -formen noch weitere, vorher nicht zu erwartende positive Eigenschaften auf:
a) Die Sandkerne weisen eine ausgesprochen glatte Oberfläche auf, dies macht bei bestimmten Anwendungen den Verzicht des Einsatzes von Schlichte möglich.
b) Die Kerne zeichnen sich durch eine sehr gute Trennwirkung aus. Dies macht in den meisten Fällen den Einsatz von zusätzlichen Trennmitteln überflüssig oder reduziert diesen beträchtlich.
c) Die Kerne besitzen eine hohe Thermoplastizität, wodurch beim Abguß die Neigung zu Blattrippen (Adern) fast vollständig unterdrückt wird.
d) Beim Abguß tritt der Hauptgasstoß verspätet ein. Dies reduziert oder vermeidet typische Gußfehler (Gasporen, Schülpen usw.)

Erfindungsgemäß werden die Binderkomponente 1 und die Binderkomponente 2 in einem Gewichtsverhältnis von 1:0,5 bis 1:2 verwendet, wobei ein Verhältnis 1:1 bevorzugt ist.

Die beiden Binderkomponenten des erfindungsgemäßen Bindemittels werden nacheinander mit der Formstoffmischung vereinigt, sorgfältig gemischt und mittels tertiärem Amin gehärtet. Üblicherweise beträgt der Anteil des Bindemittels an der Formstoffmischung 0,5 bis 4 Gew.-%, wobei 0,8 bis 3,2 Gew.-% bevorzugt sind. Der Anteil des Bindemittels variiert in Abhängigkeit von der Sandbeschaffenheit und den Fertigungsbedingungen.

Die Härtung des Bindemittels erfolgt nach dem Formfüllungsvorgang, indem man das erfindungsgemäße Bindemittel einer katalytischen Menge eines niedrig siedenden tertiären Amins aussetzt. Dies kann dadurch erreicht werden, daß tertiäres Amin in Form eines Aerosols oder Gasgemisches mit einem Trägergas durch die Form und damit durch das Formstoffgemisch geleitet wird. Als tertiäre Amine werden z.B. Dimethylethylamin, Dimethylisopropylamin, Triethylamin und/oder Trimethylamin verwendet. Als Trägergas dient unter anderem Kohlendioxid, Luft oder Stickstoff.

In einer Gießerei zählen heute neben dem Schmelzbetrieb hauptsächlich die Kernmacherei und die Formerei zu den emittierenden Abteilungen. Zum größten Teil rühren diese Emissionen von Ausdunstungen der Kerne und Formen her. Zwar sind in vielen Gießereien Absaug- und Entstaubungsanlagen bereits Standard, jedoch sind solche Maßnahmen mit einem zusätzlichen Kostenaufwand verbunden und außerdem stellen sie keine Lösung des Problems dar, sondern verlagern es nur. Die Entsorgung von Filterrückständen bleibt.

Ziel muß es also sein, solche Emissionen von vornherein zu vermeiden. Dies ist nur dadurch möglich, daß flüchtige, nichtreaktive Lösungsmittel aus den Bindersystemen möglichst vollständig eliminiert werden. Dies steht im Einklang mit der Lehre der vorliegenden Erfindung.
Das Resultat ist neben einer Schonung der Umwelt eine Humanisierung der entsprechenden Arbeitsplätze.

Die folgenden Beispiele erläutern die Erfindung.

### Beispiel 1

### Binderkomponente 1:

13,50 Gew.-Teilen Rizinusöl, 14,30 Gew.-Teilen 4-Hydroxy-4-methylpentan-2-on, 9,50 Gew.-Teilen eines technischen Gemisches aus Diisononyladipat und Diisononylphthalat und 5 Gew.-Teilen n-Butanol werden 47,00 Gew.-Teile Benzyletherharz I (ein Phenolharz nach der deutschen Offenlegungsschrift 15 83 521 mit einem molaren Verhältnis von Phenol und Formaldehyd von 1:1,5) zugesetzt und homogen vermischt. Dann werden nacheinander 10,00 Gew.-Teile Olivenöl und 0,7 Gew.-Teile bench-life-extender und Haftvermittler zugegeben.

### Binderkomponente 2:

83,30 Gew.-Teile Diphenylmethan-4,4'-diisocyanat (technisches Produkt) und 16,30 Gew.-Teile eines Gemisches aromatischer C₉₋₁₁-Kohlenwasserstoffe werden gemischt und mit 0,4 Gew.-Teilen Inhibitor versetzt.

5 kg Quarzsand werden in einem Flügelradmischer vorgelegt und mit 40 g der Binderkomponente 1 und dann mit 40 g der Binderkomponente 2 jeweils eine Minute gemischt.

Das Gemisch wird mittels einer Kernschießmaschine in Formen für genormte Prüfkörper eingeschossen und dann bei Raumtemperatur mit einem tertiären Amin in Form eines Aerosols gehärtet, wobei das Gemisch dem Aerosol 10 oder 20 Sekunden ausgesetzt wird.

Die Qualität und die Festigkeiten werden anhand von genormten Prüfkörpern und mit GF-Biegeapparaturen bestimmt.

Als Vergleich dienen hierbei zwei Verkaufsprodukte der Firma Ashland-Südchemie-Kernfest GmbH mit der Verkaufsbezeichnung Isocure 301 (Binderkomponente 1) und Isocure 602 (Binderkomponente 2) (Vergleichsversuch 1), welches insgesamt 26,5 Gew.-% flüchtige organische, nicht-reaktive Lösungsmittel enthält und Isocure 352 (Binderkomponente 1) und Isocure 652 (Binderkomponente (2) (Vergleichsversuch 2), welches insgesamt 22,4 Gew.-% flüchtige organische Lösungsmittel enthält.

Tabellen I und II zeigen die ermittelten Biegefestigkeiten, die bei einer normalen Luftfeuchtigkeit und einer relativen Luftfeuchtigkeit von 98 % nach einer Begasungszeit von 10 Sek. bzw. 20 Sek. erhalten werden.

Tabelle III zeigt die in Abhängigkeit von der Verarbeitungszeit erzielten Biegefestigkeiten, die mit den erfindungsgemäßen Bindemitteln gemessen werden.

Die Verarbeitungszeit (bench-life) bezeichnet die Zeitdauer, während der die Formstoffmischung lagerfähig ist und noch zu Formkörpern von gleichbleibender oder noch ausreichender Festigkeit verarbeitet werden kann. Hintergrund ist der, daß die Polyurethanreaktion auch ohne Zusatz von Katalysatoren abläuft. Katalysatoren initiieren nicht die Reaktion, sie beschleunigen diese nur. Die Zugabe von Inhibitoren und bench-life-extender verzögert die Reaktion und führt dadurch zu einer angemessenen Verarbeitungszeit der Formstoffmischung.

### Beispiel 2

Der Versuch von Beispiel 2 wurde analog Beispiel 1 durchgeführt, mit der Ausnahme, daß statt 10,00 Gew.-Teilen Olivenöl, 10,00 Gew.-Teile Leinöl verwendet wurden.

### Beispiel 3

Der Versuch von Beispiel 3 wurde analog Beispiel 1 durchgeführt, mit der Ausnahme, daß 99,60 Gew.-Teile Diphenylmethan-4,4'-diisocyanat und kein Gemisch aromatischer C₉₋₁₁-Kohlenwasserstoffe verwendet wurden.

### Beispiel 4

Der Versuch von Beispiel 4 wurde analog Beispiel 1 durchgeführt, mit der Ausnahme, daß statt 13,50 Gew.-Teilen Rizinusöl, 13,50 Gew.-Teile epoxidiertes Sojabohnenöl und daß nur 14,20 Gew.-Teile 4-Hydroxy-4-methylpentan-2-on, dafür aber 0,80 Gew.-Teile bench-life-extender und Haftvermittler verwendet wurden.

### Beispiel 5

Der Versuch von Beispiel 5 wurde analog Beispiel 1 durchgeführt, mit der Ausnahme, daß statt 47,0 Gew.-Teilen Benzyletherharz I 47,00 Gew.-Teile Benzyletherharz II (ein Phenolharz nach der deutschen Offenlegungsschrift 15 83 521 mit einem molaren Verhältnis von Phenol und Formaldehyd von 1:1,4) und statt 10,00 Gew.-Teilen Olivenöl 10,00 Gew.-Teile Leinöl eingesetzt wurden.

### Beispiel 6

Der Versuch von Beispiel 6 wurde analog Beispiel 1 durchgeführt, mit der Ausnahme, daß statt 47,00 Gew.-Teilen Benzyletherharz I 47,00 Gew.-Teile Benzyletherharz II und statt 10,00 Gew.-Teilen Olivenöl 10,00 Gew.-Teile epoxidiertes Sojabohnenöl verwendet wurden.

### Beispiel 7

Der Versuch von Beispiel 7 wurde analog Beispiel 1 durchgeführt, mit der Ausnahme, daß die Binderkomponente 2 90 Gew.-Teile Diphenylmethan-4,4'-diisocyanat, 9,6 Gew.-Teile Gemisch aromatischer C₉₋₁₁-Kohlenwasserstoffe und 0,4 Gew.-Teile Inhibitor enthält.

**Tabelle I**

| **Biegefestigkeiten in N · cm**^{**2**} **(Begasungszeit 10 Sek.)** | | | | | |
|---|---|---|---|---|---|
| Beispiele | Festigkeitsverlauf | | | | 98 % LF 24 Std. |
| | sofort | 1 Std. | 2 Std. | 24 Std. | |
| Vgl. 1 | 290 | 400 | 400 | 470 | 140 |
| Vgl. 2 | 220 | 520 | 490 | 570 | 380 |
| Bsp. 1 | 150 | 390 | 440 | 490 | 210 |
| Bsp. 2 | 130 | 400 | 430 | 480 | 300 |
| Bsp. 3 | - | - | - | - | - |
| Bsp. 4 | 150 | 470 | 500 | 570 | 190 |
| Bsp. 5 | 140 | 340 | 380 | 470 | 430 |
| Bsp. 6 | 150 | 450 | 470 | 570 | 470 |

**Tabelle II**

| **Biegefestigkeiten in N · cm**^{**2**} **(Begasungszeit 20 Sek.)** | | | | | |
|---|---|---|---|---|---|
| Beispiele | Festigkeitsverlauf | | | | 98 % LF 24 Std. |
| | sofort | 1 Std. | 2 Std. | 24 Std. | |
| Vgl. 1 | 330 | 400 | 400 | 400 | 160 |
| Vgl. 2 | 260 | 510 | 510 | 590 | 390 |
| Bsp. 1 | 190 | 470 | 470 | 520 | 270 |
| Bsp. 2 | 170 | 460 | 470 | 490 | 330 |
| Bsp. 3 | 110 | 300 | 330 | 480 | 300 |
| Bsp. 4 | 220 | 470 | 480 | 480 | 250 |
| Bsp. 5 | 180 | 330 | 350 | 410 | 420 |
| Bsp. 6 | 200 | 490 | 510 | 590 | 400 |
| Bsp. 7 | 160 | 390 | 420 | 490 | 280 |

**Tabelle III**

| **Biegefestigkeiten in N · cm**^{**-2**} | | | | | | |
|---|---|---|---|---|---|---|
| Beispiele | Verarbeitungszeit | | | | | |
| | nach 2 Std. | | nach 3 Std. | | nach 5 Std. | |
| | sofort | 24 Std. | sofort | 24 Std. | Sofort | 24 Std. |
| Vgl. 1 | 180 | 310 | 130 | 270 | 130 | 200 |
| Vgl. 2 | 250 | 520 | 220 | 520 | 240 | 500 |
| Bsp. 1 | 140 | 430 | 130 | 330 | 100 | 300 |
| Bsp. 2 | 150 | 390 | 140 | 340 | 120 | 280 |
| Bsp. 3 | 50 | 220 | 50 | 160 | 30 | 130 |
| Bsp. 4 | 150 | 390 | 120 | 360 | 110 | 320 |
| Bsp. 5 | 140 | 380 | 140 | 330 | 100 | 300 |
| Bsp. 6 | 130 | 350 | 100 | 320 | 80 | 270 |
| Bsp. 7 | 100 | 320 | 80 | 300 | 70 | 270 |

## Patentansprüche

1. Bindemittel aus einer Binderkomponente 1, die nindestens ein Polyol umfaßt und einer Binderkomponente 2, die mindestens ein Polyisocyanat umfaßt, dadurch gekennzeichnet, daß die Binderkomponente 1 frei ist von flüchtigen, nicht reaktiven Lösungsmitteln und mindestens einen Weichmacher, mindestens ein internes Trennmittel und mindestens eine zusätzliche hydroxylgruppenhaltige Komponente umfaßt.

2. Bindemittel nach Anspruch 1, dadurch gekennzeichnet, daß das Polyol ein Benzyletherharz, Novolak und/oder Resol ist.

3. Bindemittel nach Anspruch 1 oder 2, dadurch gekennzeichnet, daß der Weichmacher ein Phthalsäureester eines C₁₋₁₁-Alkohols, ein Adipinsäureester eines C₁₋₁₁-Alkohols, ein Fettsäurepolyglykolester und/oder ein epoxidierter Fettsäureester ist.

4. Bindemittel nacn einem der Ansprüche 1 bis 3, dadurch gekennzeichnet, daß das interne Trennmittel ein pflanzliches Öl ist.

5. Bindemittel nach einem der Ansprüche 1 bis 4, dadurch gekennzeichnet, daß die hydroxylgruppenhaltige Komponente ein primärer Alkohol, ein sekundärer Alkohol, ein Keton mit mindestens einer Hydroxylgruppe, ein Ester mit mindestens einer Hydroxylgruppe oder eine Säure mit mindestens einer Hydroxylgruppe, ein mehrwertiger Alkohol und/oder ein Etheralkohol ist.

6. Bindemittel nach einem der Ansprüche 1 bis 4, dadurch gekennzeichnet, daß der Anteil flüchtiger, nicht reaktiver Lösungsmittel in der Binderkomponente 2 unter 35 Gew.-% liegt.

7. Verwendung eines Bindemittels nacn einem der Ansprüche 1 bis 6 zur Herstellung von Kernen und/oder Formen für die Gießerei.

8. Verwendung nach Anspruch 7, dadurch gekennzeichnet, daß die Binderkomponente 1 und 2 mit der Formstoffmischung gemischt wird und mittels tertiärem Amin gehärtet wird.

## Claims

1. Binder comprising a binder component 1 which comprises at least one polyol, and a binder component 2 which comprises at least one polyisocyanate, characterized in that the binder component 1 is free from volatile, non-reactive solvents and that it comprises at least one plasticizer, at least one internal separating agent and at least one additional component that contains hydroxy groups.

2. Binder according to claim 1, characterized in that the polyol is a benzyl ether resin, a novolak and/or a resol resin.

3. Binder according to claim 1 or 2, characterized in that the plasticizer is an ester of phthalic acid and a C₁₋₁₁ alcohol, an ester of adipic acid and a C₁₋₁₁ alcohol, an ester of a fatty acid and a polyglycol and/or an epoxidized fatty acid ester.

4. Binder according to any one of claims 1 to 3, characterized in that the internal separating agent is a plant-based oil.

5. Binder according to any one of claims 1 to 4, characterized in that the component that contains hydroxy groups is a primary alcohol, a secondary alcohol, a ketone with at least one hydroxy group, an ester with at least one hydroxy group, an acid with at least one hydroxy group, a polyfunctional alcohol and/or an ether alcohol.

6. Binder according to any of claims 1 to 4, characterized in that the amount of volatile, non-reactive solvents in the binder component 2 is less than 35% by weight.

7. Use of a binder according to any one of claims 1 to 6 for producing foundry cores and molds.

8. Use according to claim 7, characterized in that the binder components 1 and 2 are mixed with the mass of forming material and cured by means of tertiary amine.

## Revendications

1. Liant à base d'un composant de liant 1 qui comporte au moins un polyol et d'un composant de liant 2 qui comporte au moins un polyisocyanate, caractérisé en ce que le composant de liant 1 est exempt de solvants volatils, non réactifs, et en ce qu'il comporte au moins un agent plastifiant, au moins un agent de séparation interne et au moins un composant additionnel contenant des groupes hydroxyle.

2. Liant suivant la revendication 1, caractérisé en ce que le polyol est une résine d'éther benzylique, une novolaque et/ou un résol.

3. Liant suivant l'une des revendications I et 2, caractérisé en ce que l'agent plastifiant est un ester d'acide phtalique d'un alcool en C₁-C₁₁, un ester d'acide adipique d'un alcool en C₁-C₁₁, un ester d'acide gras de polyglycol et/ou un ester d'acide gras époxydé.

4. Liant suivant l'une des revendications 1 à 3, caractérisé en ce que l'agent de séparation interne est une huile végétale.

5. Liant suivant l'une des revendications 1 à 4, caractérisé en ce que le composant contenant des groupes hydroxyle est un alcool primaire, un alcool secondaire, une cétone comportant au moins un groupe hydroxyle, un ester comportant au moins un groupe hydroxyle ou un acide comportant au moins un groupe hydroxyle, un alcool polyfonctionnel et/ou un éther-alcool.

6. Liant suivant l'une des revendications 1 à 4, caractérisé en ce que la fraction de solvant volatil, non réactif, dans le composant de liant 2 est inférieure à 35 % en poids.

7. Utilisation d'un liant suivant l'une des revendications 1 à 6, pour la fabrication de noyaux et/ou de moules destinés à la fonderie.

8. Utilisation suivant la revendication 7, caractérisé en ce que les composants de liant 1 et 2 sont mélangés au mélange de matières de moulage et sont durcis au moyen d'une amine tertiaire.
